# EUROPÄISCHE PATENTSCHRIFT

(11) **EP 3 961 334 B1**
(45) Veröffentlichungstag und Bekanntmachung des Hinweises auf die Patenterteilung: **03.01.2024**
(21) Anmeldenummer: 20192373.7
(22) Anmeldetag: 24.08.2020
(51) Int. Cl.: G05B 23/02, G06F 11/07

(54) **VERFAHREN ZUR MODELLIERUNG EINES KOMPONENTENFEHLERBAUMS FÜR EINE ELEKTRISCHE SCHALTUNG**
METHOD FOR MODELLING A COMPONENT FAULT TREE FOR AN ELECTRICAL CIRCUIT
PROCÉDÉ DE MODÉLISATION D'UN ARBRE DE DÉFAILLANCES DE COMPOSANTS POUR UN CIRCUIT ÉLECTRIQUE

(43) Veröffentlichungstag der Anmeldung: 02.03.2022
(73) Patentinhaber: Siemens Aktiengesellschaft, 80333 München (DE)
(72) Erfinder: ZELLER, Marc, 81243 München (DE); SCHWINN, Jean-Pascal, 81539 München (DE); WASCHULZIK, Thomas, 85354 Freising (DE)
(74) Vertreter: Siemens Patent Attorneys

(56) Entgegenhaltungen:
- EP-A1- 3 260 940
- EP-A1- 3 470 944

## Beschreibung

Die Erfindung betrifft ein Verfahren, eine Anordnung, eine Computerprogrammprodukt sowie ein computerlesbares Speichermedium zur Modellierung eines Komponentenfehlerbaums für eine elektrische Schaltung.

Bei technischen Systemen ist es häufig notwendig, ihre Sicherheit und Zuverlässigkeit während ihrer Entwicklung zu prüfen. Mit zunehmender Komplexität von sicherheitskritischen Systemen werden Sicherheits- und Zuverlässigkeitsanalysen schwieriger und aufwändiger, gleichzeitig sind sie in den meisten Fällen eine Voraussetzung für die Zulassung und Zertifizierung der Systeme.

Relevant sind Sicherheits- und Zuverlässigkeitsanalysen beispielsweise bei sicherheitskritischen Systemen in den Bereichen Automotive, Luftfahrt oder Schienenverkehr. Dabei sollen möglichst alle Gefährdungen und ihre Ursachen erkannt und bewertet werden. Neben qualitativen Aussagen über Gefährdungen sollen in der Regel auch quantitative Aussagen möglich sein, um einzuschätzen, ob die Auftrittswahrscheinlichkeit einer Gefährdung oder eines Fehlers ausreichend niedrig und damit akzeptabel ist. In vielen technischen Gebieten sind Sicherheitsstandards definiert, beispielsweise ISO 26262 im Automotive-Bereich oder CENELEC EN 50126 für Schienenverkehrssysteme.

Ein verbreitetes Mittel für Sicherheits- und Zuverlässigkeitsanalysen sind Fehlerbäume, die eine Top-down-Analyse ausgehend von einem Fehler oder einem anderen unerwünschten Ereignis darstellen. Mit ihnen kann eine qualitative oder zusätzliche eine quantitative Aussage über den Fehler bzw. das unerwünschte Ereignis getroffen werden. Sie sind in der Norm IEC 61025 festgelegt.

Neben Fehlerbäumen sind auch Gefährdungsbäume bekannt und beispielsweise in der "Sicherheitslinie Fahrzeuge (SIRF)" ("Vehicle Safety Guideline") des Eisenbahn-Bundesamtes dargestellt. Sie werden u.a. zum Festlegen sicherheitsbezogener Anforderungen und zur Risikobewertung im Rahmen der EN 50126 herangezogen und beschreiben ein technisches System in ähnlicher Weise wie Fehlerbäume.

Ferner sind Komponentenfehlerbäume bekannt. Ein Komponentenfehlerbaum stellt ein Bool'sches Modell dar, welches die Fehlerpropagation innerhalb einer Systemkomponente beschreibt. Der Begriff "Komponentenfehlerbaum" ist als "component fault tree" insbesondere in der Veröffentlichung "A new component concept for fault trees" (Kaiser, B., Liggesmeyer, P., & Mäckel, O. (2003), SCS '03: Proceedings of the 8th Australian workshop on Safety critical systems and software, = [1]) näher erläutert . Wie in [1] beschrieben können Komponentenfehlerbäume für die einzelnen Komponenten eines technischen Systems modelliert werden, die sich an dem modularen Aufbau des Systems orientieren und nicht dem Modulbegriff im Sinne der Fehlerbaumanalyse entsprechen müssen. Die Aussagekraft von Komponentenfehlerbäumen ist mit derjenigen klassischer Fehlerbäume äquivalent. Es können qualitative und auch quantitative Aussagen über das Fehlerverhalten einer Komponente und auch des gesamten technische Systems getroffen werden.

Im Unterschied zu klassischen Fehlerbäumen, die auch in [1] näher beschrieben sind, kann ein Komponentenfehlerbaum mehrere Top-Ereignisse (zu betrachtender Fehler) aufweisen. Ein Komponentenfehlerbaum kann daher von der exakten Baumstruktur abweichen. Da ein Komponentenfehlerbaum eine Komponente vollständig beschreibt, wird die Struktur der Fehlerdarstellung eines Systems mit CFTs einfacher als mit klassischen Fehlerbäumen.

Technische Systeme weisen in der Regel Software, mechanische Teile und elektrische bzw. elektronische Schaltungen auf. Dabei nimmt der Anteil der elektrischen oder elektronischen Schaltungen zu. Entsprechend größer wird die Bedeutung von Sicherheits- und Zuverlässigkeitsprüfungen der Schaltungen in sicherheitskritischen Systemen. Hierzu werden häufig Fehlerbaumanalysen durchgeführt.

Dabei erfolgt im Stand der Technik das Erstellen eines Komponentenfehlerbaums für eine Schaltung manuell unter Einbeziehung von Informationen, die im Schaltplan der Schaltung vorhanden sind, von Informationen über Ausfallraten der verwendeten Bauteile der Schaltung und von Expertenwissen. Dies ist sehr zeitaufwändig und fehleranfällig, insbesondere bei zunehmender Komplexität der Schaltung. Wird im Laufe des Entwicklungsprozesses die Schaltung geändert, muss eine daran angepasste Komponentenfehlerbaumanalyse wieder manuell durchgeführt werden. Das Dokument EP3260940 A1 zeigt ein Verfahren zur automatisierten Gefahrenerkennung für ein technisches System.

Der Erfindung liegt das Problem zugrunde, einen Komponentenfehlerbaum für ein elektrische oder elektronische Schaltung mit geringerem Aufwand und größerer Zuverlässigkeit zu erstellen.

Das Problem wird durch das Verfahren, die Anordnung, das Computerprogramm-Erzeugnis sowie das computerlesbare Speichermedium mit den Merkmalen gemäß den unabhängigen Patentansprüchen gelöst.

Weiterbildungen sind durch die Merkmale der Unteransprüche gegeben.

Mit der Erfindung ist eine automatische Erstellung eines Komponentenfehlerbaums für eine Schaltung möglich unter Einbeziehung von Informationen, die in einer Schaltungsbeschreibung der Schaltung enthalten sind.

Für die Schaltung bzw. das technische System mit der Schaltung liegt mindestens ein Gefährdungsbaum vor, der eine Gefährdung für die Schaltung modelliert. Der Gefährdungsbaum verknüpft Ereignisse miteinander, die für die Gefährdung ursächlich sind, beispielsweise mittels UND oder ODER.

Eine Schaltungsbeschreibung umfasst neben dem graphisch darstellbaren Schaltplan (d.h. einer graphischen Darstellung der Bauteile der Schaltung und ihrer Verbindungen) weitere Informationen über die Schaltung, beispielsweise eine Liste der Bauteile der Schaltung mit ihren Eigenschaften, quasi eine Datenbank der Bauteile. Dabei liegt eine eindeutige Identifizierung jeder Komponente vor, vorzugsweise in Form eines eindeutigen Identifizierungskennzeichens. Die Schaltungsbeschreibung umfasst eine Information über die Anschlüsse / Kontakte der Bauteile und Verbindungen der Bauteile untereinander und/oder nach außen. Die Schaltungsbeschreibung umfasst vorzugsweise ferner eine Zuordnung der Gefährdungen zu den Komponenten bzw. Bauteilen und zu deren einzelnen Anschlüssen, wenn diese mehrere Anschlüsse aufweisen. Vorzugsweise enthält die Schaltungsbeschreibung auch eine Fehlerrate für jede Komponente, so dass eine quantitative Analyse durch den Komponentenfehlerbaum der Schaltung möglich ist.

Die Schaltung umfasst mehrere Komponenten, die Hardware-Komponenten (Bauteile) darstellen. Im Sinne dieser Patentanmeldung fällt unter den Begriff Komponente neben einem Hardware-Bauteil (wie Relais, Kondensator, ...) beispielsweise auch ein Anschluss oder Kontakt. Andererseits kann eine Komponente auch mehrere Bauteile umfassen und einen mehrkomponentigen Teil der Schaltung darstellen. Die Komponenten sind durch elektrische oder anderweitige Leitungen oder Signalleitungen über ihre Kontakte miteinander verbunden.

Einer Komponente wird ein Komponentenfehlerbaum zugeordnet. Dabei wird ein Fehler an einem Ausgang der Komponente durch einen Ausgangsfehlermodus des Komponentenfehlerbaums modelliert, der dem bzw. einem bestimmten Ausgang der Komponente zugeordnet ist. In entsprechender Weise wird durch einen Eingangsfehlermodus des Komponentenfehlerbaums ein Fehler an einem Eingang der Komponente modelliert, wobei eine Zuordnung zwischen dem Eingang und dem Eingangsfehlermodus gegeben ist. Ein interner Fehler in der Komponente wird durch ein Basisereignis modelliert. Als Fehlerrate für das Basisereignis kann die Fehlerrate der Komponente eingesetzt werden, wenn diese bekannt ist. Ein Ausgangsfehlermodus wird mit dem zugehörigen Eingangsfehlermodus sowie mit dem Basisereignis verbunden, wobei Eingangsfehlermodus und Basisereignis mit ODER verknüpft werden. Dies ist darin begründet, dass in der Regel ein Fehler am Eingang oder ein interner Fehler der Komponente zu einem Fehler am Ausgang führen können. Mithilfe von Eingangsfehlermodus und/oder Basisereignis sowie mit Ausgangsfehlermodus kann so die Fehlerfortpflanzung (Propagation) in der Komponente modelliert werden. Dazu können ferner Bool'sche Gatter wie UND oder ODER eingesetzt werden. Die notwendigen Informationen für die Erstellung des Komponentenfehlerbaums können dem Gefährdungsbaum oder der Schaltungsbeschreibung entnommen werden. Wenn die Komponente lediglich aus einem Anschluss, bspw. einem Ausgangskontakt besteht, fallen bei dem zugehörigen Komponentenfehlerbaum Eingangsfehlermodus und Ausgangsfehlermodus zusammen.

Bei der automatischen Generierung des Komponentenfehlerbaums für eine Komponente wird vorzugsweise das Identifizierungskennzeichen der Komponente als Name des Komponentenfehlerbaums verwendet.

Ein Komponentenfehlerbaum für die Schaltung wird erzeugt, indem die Komponentenfehlerbäume der Komponenten miteinander verbunden werden.

Dabei wird ein Ausgangsfehlermodus des Komponentenfehlerbaums der eingangsseitigen Komponente mit einem Eingangsfehlermodus des Komponentenfehlerbaums der ausgangsseitigen Komponente verbunden, wenn
a. die Schaltungsbeschreibung eine Verbindung zwischen dem zugeordneten Kontakt/Ausgang der eingangsseitigen und dem zugeordneten Kontakt/Eingang der ausgangsseitigen Komponente beinhaltet und
b. der Ausgangsfehlermodus des Komponentenfehlerbaums der eingangsseitigen Komponente mit dem Eingangsfehlermodus des Komponentenfehlerbaums der ausgangsseitigen Komponente korreliert

Eine Korrelation zwischen einem Ausgangsfehlermodus des Komponentenfehlerbaums der eingangsseitigen Komponente mit einem Eingangsfehlermodus des Komponentenfehlerbaums der ausgangsseitigen Komponente liegt beispielsweise dann vor, wenn die Fehlermodi im Wesentlichen gleiche Namen aufweisen.

Eine Korrelation zwischen einem Ausgangsfehlermodus des Komponentenfehlerbaums der eingangsseitigen Komponente mit einem Eingangsfehlermodus des Komponentenfehlerbaums der ausgangsseitigen Komponente liegt gemäß einem anderen Ausführungsbeispiel dann vor, wenn den Fehlermodi zugeordnete Begriffe im Wesentlichen gleich sind.

Eine Korrelation zwischen einem Ausgangsfehlermodus des Komponentenfehlerbaums der eingangsseitigen Komponente mit einem Eingangsfehlermodus des Komponentenfehlerbaums der ausgangsseitigen Komponente liegt gemäß einem anderen Ausführungsbeispiel dann vor, wenn gemäß einem definierten hierarchischen Fehlertyp-Modell Ausgangsfehlermodus und Eingangsfehlermodus denselben Fehlertyp aufweisen oder wenn die Fehlerart des Eingangsfehlermodus einer höheren Hierarchieebene entspricht.

Für die automatische Verknüpfung eines Ausgangsfehlermodus eines Komponentenfehlerbaums einer eingangsseitigen Komponente mit einem korrelierenden Eingangsfehlermodus eines Komponentenfehlerbaums einer ausgangsseitigen Komponente können bekannte Verfahren eingesetzt werden. Durch die Verknüpfung der korrelierenden Fehlermodi wird die durch den Gefährdungsbaum vorgegebene Fehlerpropagation zutreffend abgebildet. Dies ist möglich, da die Fehlermodi eindeutig einem Kontakt (Ausgang oder Eingang) der Komponente zugeordnet sind (ein Eingangsfehlermodus ist in eindeutiger Weise einem bestimmten Eingang, ein Ausgangsfehlermodus ist eindeutig einem bestimmten Ausgang zugeordnet) und die Fehlermodi eine Information über die jeweils zugeordnete Gefährdung beinhalten. Dadurch ist auch die Zuordnung von Gefährdungen zu den Kontakten der Komponente bekannt.

Vorzugsweise haben Ausgangsfehlermodus und zugehöriger Eingangsfehlermodus die gleichen oder zumindest ähnliche Bezeichnungen. Dann kann eine Verknüpfung erfolgen, wie sie in der Veröffentlichung "Automated Compositional Safety Analysis using Component Fault Trees" (Möhrle, F., Zeller, M., Höfig, K., Rothfelder, M., & Liggesmeyer, P.), 2015 IEEE International Symposium on Software Reliability Engineering Workshops (ISSREW), pp. 152-159, Washington, D.C., USA, = [2]). beschrieben ist.

Danach erfolgt die automatische Verknüpfung bei Namensgleichheit. Es kann eine Normierung der Namen erfolgen und bei nicht identischen Namen ihr Abstand, d.h. ihre Ähnlichkeit bestimmt werden. Es können Kriterien festgelegt werden, nach denen die Namen eines Ausgangsfehlermodus und eines Eingangsfehlermodus als im Wesentlichen gleich angesehen werden, so dass ein automatisches Mappen erfolgen kann.

Ferner kann die automatische Verknüpfung eines Ausgangsfehlermodus eines Komponentenfehlerbaums einer eingangsseitigen Komponente mit einem korrelierenden Eingangsfehlermodus eines Komponentenfehlerbaums einer ausgangsseitigen Komponente gemäß der in der Veröffentlichung "A Formal Approach for Automating Compositional Safety Analysis Using Flow Type Annotations in Component Fault Trees" (Möhrle, F., Bizik, K., Zeller, M., Höfig, K., Rothfelder, M., & Liggesmeyer, P. (2017), Proceedings of the 27th European Safety and Reliability Conference (ESREL): Safety and Reliability - Theory and Applications. Taylor and Francis (CRC Press) =[3]) beschriebenen Vorgehensweise erfolgen.

Dabei wird ein hierarchisches System für Fehlerarten definiert und den Ausgangsfehlermodi und Eingangsfehlermodi eine jeweilige Fehlerart in Form einer Annotation zugeordnet.

Diese Annotationen sind maschinenlesbar, so dass korrelierende Fehlermodi automatisch verknüpft werden können.

Ein weiteres Beispiel für die automatische Verknüpfung ist in dem Patent US 10,241,852 B2 beschrieben.

Dabei wird ein hierarchisches Fehlertypen-Modell definiert, und den Fehlermodi werden jeweils ein Fehlertyp zugeordnet. Eine Verknüpfung erfolgt automatisch, wenn Ausgangsfehlermodus und Eingangsfehlermodus denselben Fehlertyp aufweisen oder wenn der Fehlertyp des Eingangsfehlermodus allgemeiner (auf einer höheren Hierarchieebene) ist. Wenn die Schaltung mehrere gleichartige Komponenten umfasst, die denselben Komponentenfehlerbaum aufweisen, wird für jede Komponente eine Instanz des entsprechenden Komponentenfehlerbaums erzeugt. Dann werden Ausgangsfehlermodi und Eingangsfehlermodi der Komponentenfehlerbäume (bzw. der jeweiligen Instanzen der Komponentenfehlerbäume) entsprechend der Informationen in der Schaltungsbeschreibung verbunden, d.h. die in der Schaltungsbeschreibung angegebenen Verbindungen werden für die Verknüpfung der Fehlermodi übernommen.

In einer Weiterbildung der Erfindung wird in einem weiteren Schritt der so erstellte Komponentenfehlerbaum für die Schaltung noch modifiziert. Wenn durch die oben beschriebenen Verbindungen von Komponentenfehlerbäumen zunächst Ausgangsfehlermodi, die mit demselben Eingangsfehlermodus verbunden werden, mit ODER verknüpft werden, müssen ggf. ein oder mehrere Verknüpfungen in eine UND-Verknüpfung geändert werden, und zwar dann, wenn der Gefährdungsbaum oder die Schaltungsbeschreibung ein gleichzeitiges Vorliegen der Fehlermodi als Voraussetzung für eine Fehlerfortpflanzung angibt. Durch die Änderung in eine UND-Verknüpfung können die Gefährdungen in zutreffender Weise zu einem oder mehreren Eingangsfehlermodi der anderen Komponenten propagiert werden.

Gemäß einer Ausführungsform wird die entsprechende Information über die UND-Verknüpfung dem Gefährdungsbaum entnommen, und die ODER-Verknüpfung wird in eine UND-Verknüpfung geändert. Dadurch, dass zunächst eine ODER-Verknüpfung generiert wird, werden zuverlässig alle Fehlerursachen einzeln erfasst, und das Risiko einer nicht erfassten Fehlerursache wird minimiert.

Gemäß einer weiteren Ausführungsform wird die entsprechende Information über die UND-Verknüpfung der Schaltungsbeschreibung entnommen, und die ODER-Verknüpfung wird in eine UND-Verknüpfung geändert. Die Schaltungsbeschreibung muss also diese Information umfassen. Vorzugsweise wird diese Information in die Datenbank der Bauteile zusätzlich aufgenommen. Ein Bauteil oder eine Komponente kann als redundant zu einem bestimmten anderen Bauteil / Komponente angegeben werden, so dass auch die zugehörigen Anschlüsse und Verbindungen redundant sind.

Dies ist insbesondere der Fall, wenn die Schaltung eine zusätzliche, zu einer Komponente redundante Komponente aufweist und der Fehler nur propagiert wird, wenn die Komponente und die redundante Komponente versagen.

In analoger Weise wird ein weiterer Schritt mit einer Modifizierung durchgeführt, wenn zunächst nur UND-verbindungen erzeugt werden, von denen einige in eine ODER-Verbindung geändert werden müssen.

Es ist aber auch möglich, bei der Verknüpfung der Komponentenfehlerbäume für die Komponenten die Information über eine UND- oder eine ODER-Verknüpfung bereits zu berücksichtigen.

Eine quantitative Aussage über die Sicherheit und Zuverlässigkeit der Schaltung ist möglich, wenn entsprechende Daten vorhanden sind. Beispielsweise kann die Schaltungsbeschreibung MTTF-Werte (mean time to failure) oder andere Fehlerraten für die Komponenten enthalten. Der Fehlerbaum kann quantitative Angaben über Gefährdungen bzw. bestimmte Ereignisse umfassen, die in die entsprechenden Fehlermodi übernommen werden.

Das erfindungsgemäße Verfahren kann bei der Erzeugung des Komponentenfehlerbaums für die Schaltung auf bereits existierende Komponentenfehlerbäume von Komponenten zurückgreifen und diese verwenden, wenn solche bereits früher generiert wurden und beispielsweise aus einer Bibliothek abgerufen werden können. Es ist aber auch möglich, die Komponentenfehlerbäume der Komponenten bei der Durchführung des Verfahrens zu erzeugen.

Aufgrund der automatischen Erstellung eines Komponentenfehlerbaums für eine Schaltung wird manueller Aufwand vermieden. Mit dem Komponentenfehlerbaum kann eine qualitative und ggf. auch quantitative Fehlerbaumanalyse durchgeführt werden. Bei einer Änderung der Schaltung, beispielsweise durch den Austausch eines Bauteils oder eine Änderung der Verdrahtung, kann der Komponentenfehlerbaum leicht und automatisch angepasst werden, eine manuelle Änderung ist nicht notwendig. Es muss lediglich die geänderte Schaltungsbeschreibung verwendet werden, ggf. auch ein geänderter Gefährdungsbaum.

Es ist auch möglich, den erfindungsgemäß generierten Komponentenfehlerbaum für die Schaltung mit einem bereits vorliegenden manuell generierten zu vergleichen und so die Sicherheit weiter zu erhöhen. Es kann festgestellt werden, ob der manuell erstellte Komponentenfehlerbaum richtig und vollständig ist.

Ferner können durch das Verfahren Fehler, beispielsweise Inkonsistenzen oder Lücken, in dem Schaltplan und/oder in der Schaltungsbeschreibung gefunden werden. Komponentenfehlerbäume von Komponenten, die nicht mit Komponentenfehlerbäumen anderer Komponenten verbunden sind (also quasi "isoliert" sind), deuten darauf hin, dass die Informationen, die dem Verfahren als Grundlage dienen möglichweise unvollständig oder fehlerhaft sind. Beispielsweise fehlen in der Schaltungsbeschreibung Informationen über eine Verdrahtung der Komponente, zu der ein solcher "isolierter" Komponentenfehlerbaum gehört, mit einer anderen Komponente, zu der oder von der ein Fehler propagiert wird. Mit anderen Worten, die beiden genannten Komponentenfehlerbäume weisen zwar korrelierende Fehlermodi auf, werden aber aufgrund der im Schaltplan fehlenden Verbindung zwischen den Komponenten nicht miteinander verknüpft. Als weiteres Beispiel kann eine Information über die Fehler bzw. Gefährdungen und/oder ihre Zuordnung zu einer Komponente oder einem Anschluss fehlen oder falsch sein, so dass die Verknüpfung korrelierender Fehlermodi an dieser Stelle nicht möglich ist. Das Auffinden derartiger Fehler und ihrer Ursachen kann automatisch erfolgen.

Nachfolgend wird die Erfindung anhand bevorzugter Ausführungsbeispiele mit Hilfe der Figuren näher beschrieben, wobei nur die zum Verständnis der Erfindung notwendigen Merkmale dargestellt sind.

Es zeigen
Fig.1 - 4 ein erstes Ausführungsbeispiel
Fig. 1: einen Gefährdungsbaum
Fig. 2: einen Schaltplan als Teil einer Schaltungsbeschreibung
Fig. 3: Komponentenfehlerbäume der Komponenten
Fig. 4: den Komponentenfehlerbaum der Schaltung
Fig. 5 - 6 ein zweites Ausführungsbeispiel

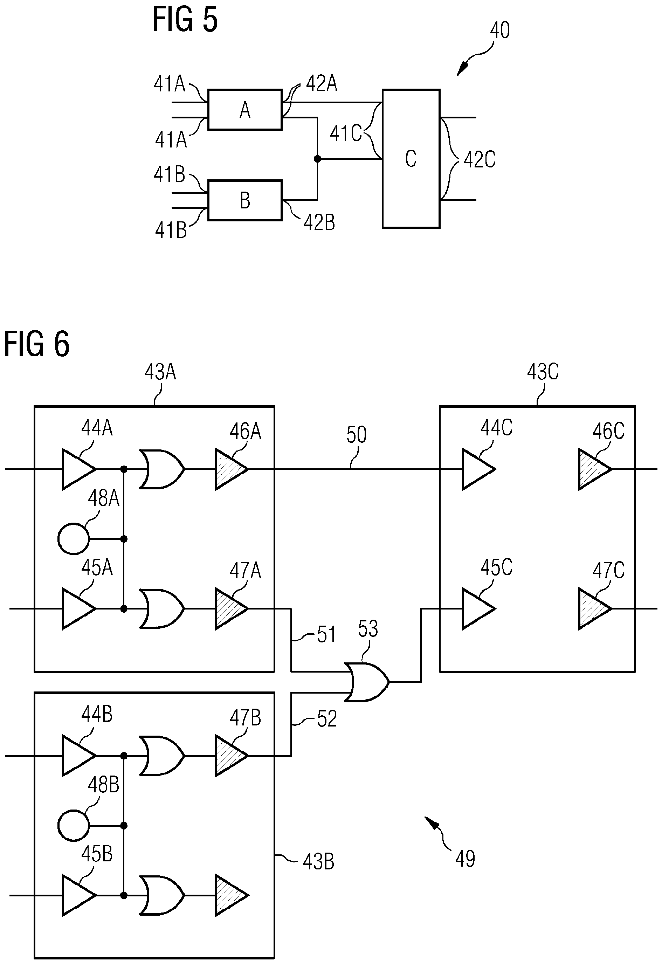

Fig. 5: einen Schaltplan
Fig. 6: den Komponentenfehlerbaum der Schaltung

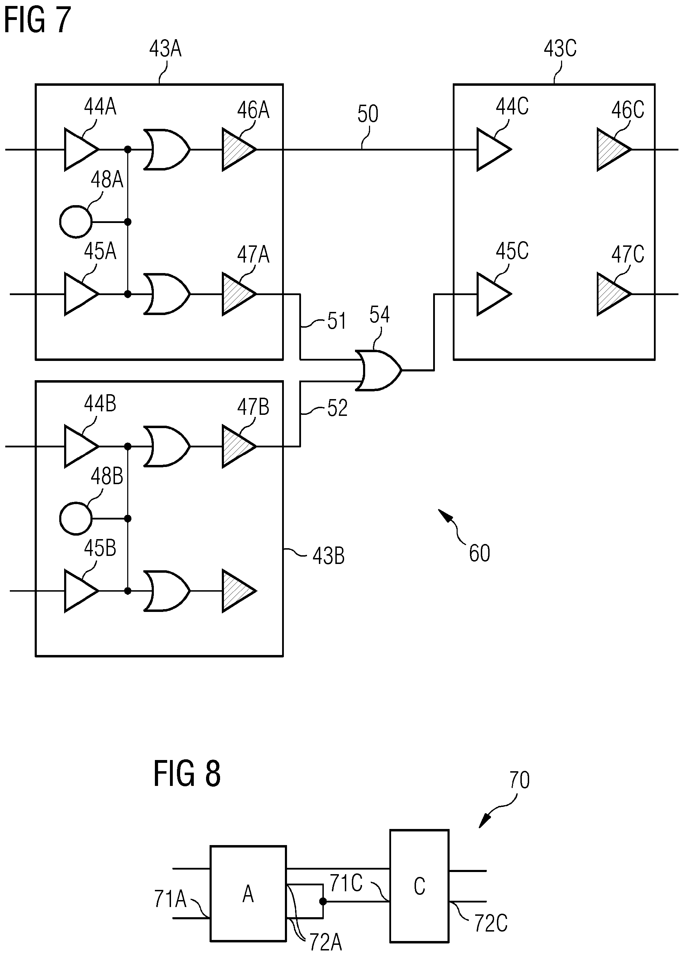

Fig. 7 - 8 ein drittes Ausführungsbeispiel
Fig. 7: einem Schaltplan
Fig. 8: den Komponentenfehlerbaum der Schaltung

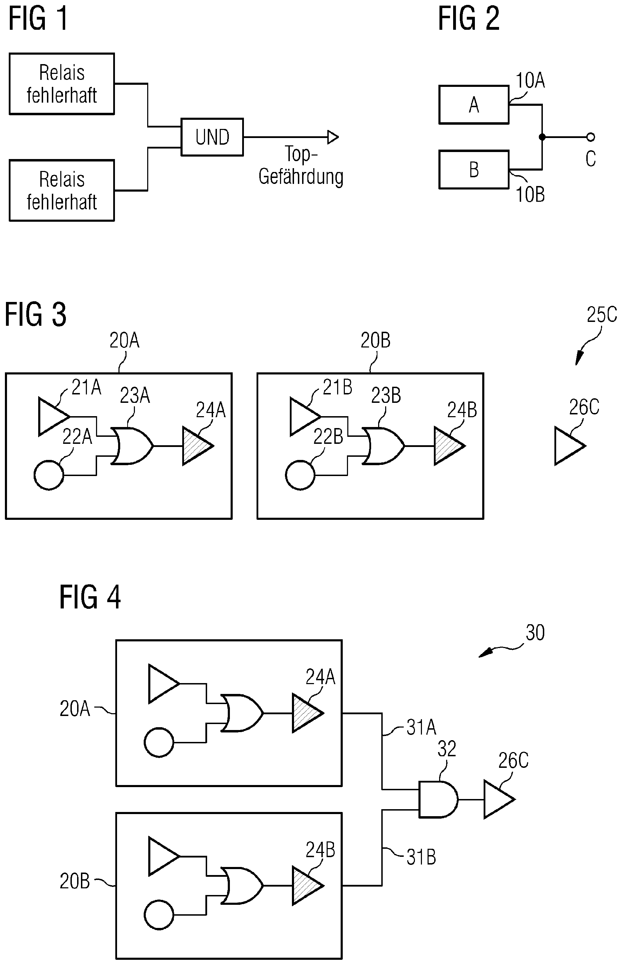

Figur 1 zeigt den Gefährdungsbaum für eine elektrische Schaltung mit zwei Relais als eingangsseitige Komponenten, wobei das zweite Relais redundant zum ersten Relais ist. Eine Gefährdung für die Schaltung liegt vor, wenn beide Relais versagen, d.h. ein Fehler an beiden Ausgängen vorhanden ist. Im Gefährdungsbaum sind daher die beiden Ereignisse "Relais fehlerhaft" mit UND verknüpft zum Ereignis "Top-Gefährdung".

Figur 2 zeigt den zugehörigen Schaltplan mit den beiden Relais A, B und den Ausgängen 10A und 10B, die zu einem gemeinsamen Ausgang C verschaltet sind. Die übrigen Anschlüsse der Relais sind der Übersichtlichkeit halber nicht dargestellt. Der gemeinsame Ausgang C stellt im Sinne des Patents die ausgangsseitige Komponente dar. Der Schaltplan ist Teil einer Schaltungsbeschreibung, die in Form einer Datenbank Informationen zu den Komponenten der Schaltung und deren Anschlüssen und Verbindungen aufweist. Beispielsweise sind für jede Komponente eine Identifikationsnummer, die genaue Bauteilbezeichnung, ihre Fehlerrate, ihre Sicherheitsrelevanz, ihre Kontakte mit zugeordneten Verbindungen und anderes gespeichert.

Figur 3 zeigt den Komponentenfehlerbaum 20A, 20B der Relais. Da beide Relais A, B identische Bauteile sind, ist der Komponentenfehlerbaum für beide gleich, dargestellt in Figur 3 sind daher zwei Instanzen des Komponentenfehlerbaums. Im Sinne des Patents wird der Begriff "Komponentenfehlerbaum" auch für dessen Instanzen verwendet. Er weist einen Eingangsfehlermodus 21A, 21B auf, der beispielsweise eine fehlerhafte Ansteuerung des Relais abbildet, sowie ein Basisereignis 22A, 22B, das einen internen Fehler des Relais abbildet. Sie sind mit ODER 23A, 23B verknüpft zu einem Ausgangsfehlermodus 24A, 24B. Der Ausgangsfehlermodus weist einen Namen auf, beispielsweise "Relaisfehler". Bei dem Komponentenfehlerbaum 25C für die Komponente "gemeinsamer Ausgang" fallen Eingangsfehlermodus und Ausgangsfehlermodus zusammen, sie sind mit "Relaisfehler" bezeichnet. Der Einfachheit halber wird er nur als Eingangsfehlermodus 26C dargestellt.

Figur 4 zeigt den generierten Komponentenfehlerbaum 30 der Schaltung. Da der Schaltplan die eingangsseitige Komponente A mit dem Ausgang C verbindet und die eingangsseitige Komponente B mit dem Ausgang C verbindet und die Namen der Fehlermodi gleich sind, nämlich "Relaisfehler", wird automatisch eine Verknüpfung 31A zwischen dem Ausgangsfehlermodus 24A des eingangsseitigen Komponentenfehlerbaums 20A und dem Eingangsfehlermodus 26C des ausgangsseitigen Komponentenfehlerbaums 25C erzeugt. Ebenso wird automatisch eine Verknüpfung 31B zwischen dem Ausgangsfehlermodus 24B des eingangsseitigen Komponentenfehlerbaums 20B und dem Eingangsfehlermodus 26C des ausgangsseitigen Komponentenfehlerbaums 25C erzeugt.

Die beiden Verknüpfungen 31A, 31B werden automatisch mit ODER mit dem Eingangsfehlermodus 26C des Ausgangs verknüpft. Im Gefährdungsbaum der Schaltung bzw. des technischen Systems mit der Schaltung und/oder in der Schaltungsbeschreibung ist die Information gespeichert, dass die beiden Ereignisse "Relais fehlerhaft" mit UND verknüpft sind und dann die Gefährdung "Top-Gefährdung" eintritt. Diese Information kann im Gefährdungsbaum den Komponenten und/oder den Verbindungen zugeordnet sein. Die Information über die UND-Verknüpfung wird automatisch ausgelesen und die im Komponentenfehlerbaum erzeugte ODER-Verbindung wird in eine UND-Verbindung 32 geändert.

Die Berücksichtigung der Information, dass eine UND-Verbindung erzeugt werden muss, kann auch schon bei der Erstellung der Verknüpfungen erfolgen, so dass keine nachfolgende Modifizierung notwendig ist.

Figur 5 zeigt als weiteres Ausführungsbeispiel einen Schaltplan 40 mit zwei eingangsseitigen Komponenten A, B und einer ausgangsseitigen Komponente C. Wie im ersten Ausführungsbeispiel ist jeweils ein Ausgang der eingangsseitigen Komponenten mit der ausgangsseitigen Komponente C verbunden. Die Komponenten weisen mehrere Eingangskontakte 41 A, 41B, 41 C und mehrere Ausgangskontakte 42A, 42B, 42C auf. Die Komponenten können mehrere Eingangsfehler und mehrere Ausgangsfehler sowie ggf. interne Fehler aufweisen.

Mithilfe des (nicht dargestellten) Gefährdungsbaums wird für jede Komponente ein Komponentenfehlerbaum erzeugt, oder ist bereits erzeugt worden und liegt in einer Bibliothek vor.

Figur 6 zeigt die auf Basis des Gefährdungsbaums erstellten Komponentenfehlerbäume 43A, 43B 43C für die Komponenten A, B, C. Sie weisen Eingangsfehlermodi 44 A, 45A, 44B, 45B, 44C, 45C und Ausgangsfehlermodi 46 A, 47A, 47B, 46C, 47C auf, die jeweils einem Eingangskontakt bzw. Ausgangskontakt der entsprechenden Komponente A, B, C zugeordnet sind. Es ist grundsätzlich auch möglich, dass mehrere Eingangsfehlermodi demselben Eingangskontakt zugeordnet sind, gleiches gilt für Ausgangsfehlermodi und Ausgangskontakte. Interne Fehler werden durch Basisereignisse 48A, 48B berücksichtigt. Aus Gründen der Übersichtlichkeit ist beim Komponentenfehlerbaum 43C der ausgangsseitigen Komponente C die innere Struktur nicht dargestellt.

Die Fehlermodi sind mit Bezeichnungen versehen, beispielsweise Ausgangsfehlermodus 46A mit "Fehler1", Ausgangsfehlermodi 47A und 47B mit "Fehler2", Eingangsfehlermodus 44C mit "Fehler_1" und Eingangsfehlermodus 45C mit "Fehler_2".

Der Komponentenfehlerbaum 49 für die Schaltung wird nun automatisch erstellt, indem ein Ausgangsfehlermodus eines eingangsseitigen Komponentenfehlerbaums mit einem Eingangsfehlermodus des ausgangsseitigen Komponentenfehlerbaums verknüpft wird, wenn die zugeordneten Kontakte im Schaltplan bzw. der Schaltungsbeschreibung miteinander verbunden sind und die Fehlermodi korrelieren. Eine Korrelation kann aufgrund ähnlicher, d.h. im Wesentlichen gleicher Bezeichnungen, festgestellt werden. Die Bezeichnungen "Fehler1" und "Fehler_1" sind im Wesentlichen gleich, was durch ein im Stand der Technik beschriebenes Verfahren ermittelt werden kann. Gleiches gilt für die Bezeichnungen "Fehler2" und "Fehler_2". Auf diese Weise werden die Verknüpfungen 50, 51, 52 automatisch erstellt, wobei die Ausgangsfehlermodi "Fehler2" in einer ODER-Verknüpfung 53 mit dem korrelierenden Eingangsfehlermodus "Fehler_2" verbunden werden.

Figur 7 zeigt ein Ausführungsbeispiel mit folgender Änderung gegenüber Figur 6: Wenn der Gefährdungsbaum für die Schaltung bzw. für das technische System mit der Schaltung oder die Schaltungsbeschreibung die Information enthält, dass nur bei gleichzeitigem Auftreten von "Fehler2" als Ausgangsfehlermodus der eingangsseitigen Komponentenfehlerbäumen bzw. an den Ausgangskontakten 42A und 42B der Komponenten A und B der Fehler zum ausgangsseitigen Komponentenfehlerbaum 43C bzw. zur Komponente C propagiert, müssen die Verknüpfungen 51 und 52 in einer UND-Verknüpfung mit dem Eingangsfehlermodus 45C verknüpft werden, In diesem Fall wird die Information über die UND-Verknüpfung dem Gefährdungsbaum oder der Schaltungsbeschreibung entnommen und der Komponentenfehlerbaum 60 für die Schaltung 40 mit der entsprechenden UND-Verknüpfung erzeugt.

Die Schaltungs- Komponentenfehlerbäume gemäß den Figuren 6 und 7 beziehen sich auf Schaltpläne mit gleichen Verbindungen zwischen den Komponenten A, B und C, dargestellt in Figur 5. Die Gefährdungsbäume sind jedoch unterschiedlich, woraus sich Unterschiede in den Schaltungsbeschreibungen ergeben sowie unterschiedliche logische Verknüpfungen, nämlich in dem einen Fall ODER 53 und in dem anderen Fall UND 54. Ferner sind in der Regel die Komponenten A, B und C in den beiden Fällen nicht jeweils identisch.

Figur 8 zeigt einen Schaltplan 70 mit einer eingangsseitigen Komponente A und einer ausgangsseitigen Komponente C, wobei zwei Kontakte 72A der eingangsseitigen Komponente A mit einem Kontakt 71 C der ausgangsseitigen Komponente C verbunden sind.

Die Komponenten können mehrere Eingangsfehler und mehrere Ausgangsfehler aufweisen.

Für jede Komponente wird ein Komponentenfehlerbaum erzeugt, oder ist bereits erzeugt worden und liegt in einer Bibliothek vor.

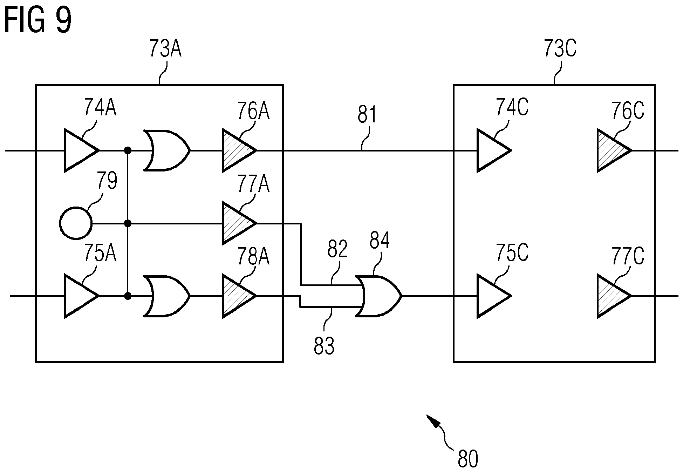

Figur 9 zeigt die auf Basis des Gefährdungsbaums erstellten Komponentenfehlerbäume 73A, 73C für die Komponenten A, C.

Sie weisen Eingangsfehlermodi 74 A, 75A, 74C, 75C und Ausgangsfehlermodi 76A, 77A, 78A, 76C, 77C auf, die Eingangskontakten bzw. Ausgangskontakten der entsprechenden Komponente A, C zugeordnet sind.

Wie im vorherigen Beispiel sind die Fehlermodi mit Bezeichnungen versehen und durch automatisches Verbinden eines Ausgangsfehlermodus mit einem korrelierenden Eingangsfehlermodus des ausgangsseitigen Komponentenfehlerbaums wird der Komponentenfehlerbaum 80 für die Schaltung 70 erstellt. In diesem Beispiel ist in der Schaltungsbeschreibung eine Information gespeichert, dass die Ausgangsfehlermodi 77A und 78A mit einer UND-Verknüpfung zum Eingangsfehlermodus 75C der ausgangsseitigen Komponente propagieren, entsprechend wird diese Information ausgelesen und die Verbindungen 82 und 83 in einer UND-Verknüpfung zum Eingangsfehlermodus 75C geführt.

## Patentansprüche

1. Verfahren zur Modellierung eines Komponentenfehlerbaums für eine elektrische Schaltung
- bei dem die elektrische Schaltung mindestens eine eingangsseitige (A,B) und mindestens eine ausgangsseitige Komponente (C) aufweist, wobei die mindestens eine eingangsseitige (A,B) und mindestens eine ausgangsseitige Komponente (C) Hardware-Komponenten darstellen, die durch elektrische oder anderweitige Leitungen oder Signalleitungen über Anschlüsse miteinander verbunden sind,
- bei dem für die Komponenten jeweils ein Komponentenfehlerbaum (20A, 20B, 25C, 43A, 43B, 43C, 73A, 73C) verwendet wird,
- der eine Gefährdung für die Komponente modelliert , und
- der mindestens einen Eingangsfehlermodus (21A, 21B, 26C, 44A, 44B, 44C, 45A, 45B, 45C, 74A, 74C, 75A, 75C) oder ein Basisereignis (22A, 22B, 48A, 48B, 79) und mindestens einen Ausgangsfehlermodus (24A, 24B, 46A, 46C, 47A, 47B, 47C, 76A, 76C, 77A, 77C, 78A) aufweist, wobei der Ausgangsfehlermodus und der ggf. vorhandene Eingangsfehlermodus jeweils einem Anschluss (10A, 10B, 41A, 41B, 41C, 42A, 42B, 42C, 71A, 71C, 72A, 72C) der Komponente zugeordnet sind,
- bei dem eine Schaltungsbeschreibung verwendet wird, die Informationen über die Komponenten (A, B, C) der elektrischen Schaltung und mindestens eine Verbindung der Komponenten untereinander aufweist, wobei die Schaltungsbeschreibung einen graphisch darstellbaren Schaltplan (40, 70), eine Liste von Bauteilen der Schaltung mit ihren Eigenschaften, eine Information über die Anschlüsse der Bauteile und über Verbindungen der Bauteile untereinander und/oder nach außen umfasst,
- bei dem die Komponentenfehlerbäume (20A, 20B, 25C, 43A, 43B, 43C, 73A, 73C) der Komponenten (A, B, C) basierend auf der Schaltungsbeschreibung verbunden werden, wobei ein Ausgangsfehlermodus des Komponentenfehlerbaums der eingangsseitigen Komponente (A) mit einem Eingangsgfehlermodus des Komponentenfehlerbaums der ausgangsseitigen Komponente (C) verbunden wird, wenn
a. die Schaltungsbeschreibung eine Verbindung zwischen dem zugeordneten Anschluss der eingangsseitigen Komponente (A, B) und dem zugeordneten Anschluss der ausgangsseitigen Komponente (C) beinhaltet und
b. der Ausgangsfehlermodus (24A, 24B, 46A, 47A, 47B, 76A, 77A, 78A) des Komponentenfehlerbaums der eingangsseitigen Komponente (A,B) mit einem Eingangsgfehlermodus (26C, 44C, 45C, 74C, 75C) des Komponentenfehlerbaums der ausgangsseitigen Komponente (C) korreliert.

2. Verfahren nach Anspruch 1, bei dem ein Gefährdungsbaum für die elektrische Schaltung und / oder für ein technisches System mit der Schaltung vorliegt, der eine Gefährdung für die elektrische Schaltung modelliert.

3. Verfahren nach Anspruch 1 oder 2, bei dem der Komponentenfehlerbaum für die Schaltung (30, 49, 60, 80) modifiziert wird , wobei eine ODER-Verknüpfung von Ausgangsfehlermodi des Komponentenfehlerbaums der eingangsseitigen Komponente (A) oder mehrerer Komponentenfehlerbäume von eingangsseitigen Komponenten (A, B), die mit demselben Eingangsfehlermodus des Komponentenfehlerbaums der ausgangsseitigen Komponente (C) verbunden sind, in eine UND-Verknüpfung (32, 54, 84) geändert wird, wenn
der Gefährdungsbaum für die Schaltung und / oder für ein technisches System mit der Schaltung eine entsprechende Information über die Verknüpfung als UND-Verknüpfung enthält oder
die Schaltungsbeschreibung eine entsprechende Information über die Verknüpfung als UND-Verknüpfung enthält.

4. Verfahren nach Anspruch 1 oder 2, bei dem der Komponentenfehlerbaum für die Schaltung modifiziert wird , wobei eine UND-Verknüpfung von Ausgangsfehlermodi des Komponentenfehlerbaums der eingangsseitigen Komponente (A) oder mehrerer Komponentenfehlerbäume von eingangsseitigen Komponenten (A, B) , die mit demselben Eingangsfehlermodus des Komponentenfehlerbaums der ausgangsseitigen Komponente (C) verbunden sind, in eine ODER-Verknüpfung (53) geändert wird, wenn
der Gefährdungsbaum für die Schaltung und / oder für ein technisches System mit der Schaltung eine entsprechende Information über die Verknüpfung als ODER-Verknüpfung enthält oder
die Schaltungsbeschreibung eine entsprechende Information über die Verknüpfung als ODER-Verknüpfung enthält.

5. Verfahren nach einem der vorhergehenden Ansprüche, bei dem der Ausgangsfehlermodus des Komponentenfehlerbaums der eingangsseitigen Komponente (A, B) mit einem Eingangsfehlermodus des Komponentenfehlerbaums der ausgangsseitigen Komponente (C) korreliert, wenn die Fehlermodi im wesentlichen gleiche Namen aufweisen.

6. Verfahren nach einem der Ansprüche 1 - 4, bei dem der Ausgangsfehlermodus des Komponentenfehlerbaums der eingangsseitigen Komponente (A) mit einem Eingangsfehlermodus des Komponentenfehlerbaums der ausgangsseitigen Komponente (C) korreliert, wenn den Fehlermodi zugeordnete Begriffe im Wesentlichen gleich sind.

7. Verfahren nach einem der vorhergehenden Ansprüche, bei dem Ausgangsfehlermodi von mehreren Komponentenfehlerbäumen eingangsseitiger Komponenten (A,B) mit einem Eingangsfehlermodus des Komponentenfehlerbaums der ausgangsseitigen Komponente verbunden werden.

8. Verfahren nach einem der vorhergehenden Ansprüche, bei dem Ausgangsfehlermodi von mehreren Komponentenfehlerbäumen eingangsseitiger Komponenten (A, B) mit mehreren Eingangsfehlermodi von Komponentenfehlerbäumen von mehreren ausgangsseitigen Komponenten (C) verbunden werden.

9. Verfahren nach einem der vorhergehenden Ansprüche, bei dem die Schaltungsbeschreibung eine Identifizierung der Komponenten (A, B, C) und ihrer Anschlüsse (10A, 10B, 41A, 41B, 41C, 42A, 42B, 42C, 71A, 71C, 72A, 72C) umfasst.

10. Verfahren nach einem der vorhergehenden Ansprüche, bei dem die Schaltungsbeschreibung eine Zuordnung einer Gefährdung zu einem Anschluss (10A, 10B, 41A, 41B, 41C, 42A, 42B, 42C, 71A, 71C, 72A, 72C) einer Komponente (A, B, C) weiter umfasst.

11. Verfahren nach einem der vorhergehenden Ansprüche, bei dem die Schaltungsbeschreibung eine Information über redundante Komponenten und/oder redundante Verbindungen weiter umfasst und/oder über UND-Verknüpfungen von Komponenten oder Verbindungen weiter umfasst.

12. Verfahren nach einem der vorhergehenden Ansprüche, bei dem die Schaltung mindestens zwei identische Komponenten aufweist und für diese jeweils der gleiche Komponentenfehlerbaum (20A, 20B) verwendet wird.

13. Verfahren nach einem der vorhergehenden Ansprüche, bei dem die Schaltungsbeschreibung eine Information über eine Fehlerrate einer Komponente weiter umfasst.

14. Verfahren nach einem der vorhergehenden Ansprüche, bei dem der Komponentenfehlerbaum der Schaltung eine quantitative Aussage über eine Fehlerrate der Schaltung umfasst.

15. Verfahren nach einem der vorhergehenden Ansprüche, bei dem der erzeugten Komponentenfehlerbaums geprüft wird, um einen eventuellen Fehler in der Schaltungsbeschreibung aufzufinden und /oder identifizieren.

16. Vorrichtung zum Modellieren eines Fehlerbaums einer elektrischen Schaltung, umfassend Mittel zur Ausführung des Verfahrens nach einem der vorhergehenden Ansprüche.

17. Computerprogrammprodukt, umfassend Befehle, die bei der Ausführung des Programms durch einen Computer diesen veranlassen, ein Verfahren nach einem der Ansprüche 1-15 auszuführen

18. Computerlesbarer Datenträger, auf dem das Computerprogrammprodukt nach Anspruch 17 gespeichert ist.

## Claims

1. Method for modelling a component fault tree for an electric circuit,
- in which the electric circuit has at least one input-side (A, B) and at least one output-side component (C), wherein the at least one input-side (A, B) and at least one output-side component (C) are hardware components which are connected to one another via terminals by means of electric or other lines or signal lines,
- in which a respective component fault tree (20A, 20B, 25C, 43A, 43B, 43C, 73A, 73C) is used for the components,
- which models a hazard for the component, and
- which has at least one input fault mode (21A, 21B, 26C, 44A, 44B, 44C, 45A, 45B, 45C, 74A, 74C, 75A, 75C) or a basic event (22A, 22B, 48A, 48B, 79) and at least one output fault mode (24A, 24B, 46A, 46C, 47A, 47B, 47C, 76A, 76C, 77A, 77C, 78A), wherein the output fault mode and the possibly present input fault mode are each assigned to a terminal (10A, 10B, 41A, 41B, 41C, 42A, 42B, 42C, 71A, 71C, 72A, 72C) of the component,
- in which a circuit description is used, which comprises information about the components (A, B, C) of the electric circuit and at least one connection of the components to one another, wherein the circuit description comprises a circuit diagram (40, 70) that can be illustrated graphically, a list of component parts of the circuit together with their properties, a piece of information about the terminals of the component parts and connections of the component parts to one another and/or to the outside,
- in which the component fault trees (20A, 20B, 25C, 43A, 43B, 43C, 73A, 73C) of the components (A, B, C) are connected based on the circuit description, wherein an output fault mode of the component fault tree of the input-side component (A) is connected to an input fault mode of the component fault tree of the output-side component (C) if
a. the circuit description contains a connection between the assigned terminal of the input-side component (A, B) and the assigned terminal of the output-side component (C) and
b. if the output fault mode (24A, 24B, 46A, 47A, 47B, 76A, 77A, 78A) of the component fault tree of the input-side component (A, B) correlates to an input fault mode (26C, 44C, 45C, 74C, 75C) of the component fault tree of the output-side component (C).

2. Method according to Claim 1, in which a hazard tree for the electric circuit and/or for a technical system comprising the circuit is present, said hazard tree modelling a hazard for the electric circuit.

3. Method according to Claim 1 or 2, in which the component fault tree for the circuit (30, 49, 60, 80) is modified, wherein an OR link of output fault modes of the component fault tree of the input-side component (A) or several component fault trees of input-side components (A, B), which are connected to the same input fault mode of the component fault tree of the output-side component (C), is changed to an AND link (32, 54, 84) if
the hazard tree for the circuit and/or for a technical system comprising the circuit contains a corresponding piece of information about the link as an AND link or
the circuit description contains a corresponding piece of information about the link as an AND link.

4. Method according to Claim 1 or 2, in which the component fault tree for the circuit is modified, wherein an AND link of output fault modes of the component fault tree of the input-side component (A) or several component fault trees of input-side components (A, B), which are connected to the same input fault mode of the component fault tree of the output-side component (C), is changed to an OR link (53) if
the hazard tree for the circuit and/or for a technical system comprising the circuit contains a corresponding piece of information about the link as an OR link or the circuit description contains a corresponding piece of information about the link as an OR link.

5. Method according to one of the preceding claims, in which the output fault mode of the component fault tree of the input-side component (A, B) correlates to an input fault mode of the component fault tree of the output-side component (C) if the fault modes have essentially the same name.

6. Method according to one of Claims 1-4, in which the output fault mode of the component fault tree of the input-side component (A) correlates to an input fault mode of the component fault tree of the output-side component (C) if terms assigned to the fault modes are essentially the same.

7. Method according to one of the preceding claims, in which output fault modes of several component fault trees of input-side components (A, B) are connected to an input fault mode of the component fault tree of the output-side component.

8. Method according to one of the preceding claims, in which output fault modes of several component fault trees of input-side components (A, B) are connected to several input fault modes of component fault trees of several output-side components (C).

9. Method according to one of the preceding claims, in which the circuit description comprises an identification of the components (A, B, C) and the terminals (10A, 10B, 41A, 41B, 41C, 42A, 42B, 42C, 71A, 71C, 72A, 72C) thereof.

10. Method according to one of the preceding claims, in which the circuit description also comprises an assignment of a hazard to a terminal (10A, 10B, 41A, 41B, 41C, 42A, 42B, 42C, 71A, 71C, 72A, 72C) of a component (A, B, C).

11. Method according to one of the preceding claims, in which the circuit description also comprises a piece of information about redundant components and/or redundant connections and/or about AND links of components or connections.

12. Method according to one of the preceding claims, in which the circuit has at least two identical components and the same component fault tree (20A, 20B) is used for each of these.

13. Method according to one of the preceding claims, in which the circuit description also comprises a piece of information about a fault rate of a component.

14. Method according to one of the preceding claims, in which the component fault tree of the circuit comprises a quantitative statement about a fault rate.

15. Method according to one of the preceding claims, in which the generated component fault tree is checked in order to find and/or identify a possible fault in the circuit description.

16. Device for modelling a fault tree of an electric circuit, comprising means for carrying out the method according to one of the preceding claims.

17. Computer program product, comprising instructions, which, when the program is executed by a computer, cause the computer to carry out a method according to one of Claims 1-15.

18. Computer-readable data carrier, on which the computer program product according to Claim 17 is stored.

## Revendications

1. Procédé de modélisation d'un arbre de défaillances de composants pour un circuit électrique
- dans lequel le circuit électrique comprend au moins un composant côté entrée (A, B) et au moins un composant côté sortie (C), dans lequel l'au moins un composant côté entrée (A, B) et au moins un composant côté sortie (C) représentent des composants matériels qui sont reliés entre eux par des lignes électriques ou d'autres lignes ou par des lignes de signaux via des connecteurs,
- dans lequel chaque arbre de défaillances de composants (20A, 20B, 25C, 43A, 43B, 43C, 73A, 73C) est utilisé pour les composants,
- qui modélise un danger pour le composant, et
- qui comprend au moins un mode d'erreur d'entrée (21A, 21B, 26C, 44A, 44B, 44C, 45A, 45B, 45C, 74A, 74C, 75A, 75C) ou un événement de base (22A, 22B, 48A, 48B, 79) et au moins un mode d'erreur de sortie (24A, 24B, 46A, 46C, 47A, 47B, 47C, 76A, 76C, 77A, 77C, 78A), dans lequel le mode d'erreur de sortie et le mode d'erreur d'entrée éventuellement présent sont assignés à un raccordement (10A, 10B, 41A, 41B, 41C, 42A, 42B, 42C, 71A, 71C, 72A, 72C) des composants,
- dans lequel est utilisée une description de circuit qui contient des informations sur les composants (A, B, C) du circuit électrique et au moins une liaison des composants entre eux, dans lequel la description de circuit comprend un schéma de câblage représentable graphiquement (40, 70), une liste de composants du circuit avec leurs propriétés, une information sur les raccordements des composants et sur les liaisons des composants entre eux et/ou avec l'extérieur,
- dans lequel les arbres de défaillances de composants (20A, 20B, 25C, 43A, 43B, 43C, 73A, 73C) des composants (A, B, C) sont reliés sur la base de la description de circuit, dans lequel un mode d'erreur de sortie de l'arbre de défaillances de composants du composant côté entrée (A) est relié à un mode d'erreur d'entrée de l'arbre de défaillances de composants du composant côté sortie (C) lorsque
a. la description du circuit comprend une liaison entre le raccordement attribué du composant côté entrée (A, B) et le raccordement attribué du composant côté sortie (C), et
b. le mode d'erreur de sortie (24A, 24B, 46A, 47A, 47B, 76A, 77A, 78A) de l'arbre de défaillances de composants du composant côté entrée (A, B) est corrélé avec un mode d'erreur d'entrée (26C, 44C, 45C, 74C, 75C) de l'arbre de défaillances de composants du composant côté sortie (C).

2. Procédé selon la revendication 1, dans lequel il existe un arbre de défaillances pour le circuit électrique et/ou pour un système technique avec le circuit, qui modélise un danger pour le circuit électrique.

3. Procédé selon la revendication 1 ou 2, dans lequel l'arbre de défaillances de composants pour le circuit (30, 49, 60, 80) est modifié, dans lequel une liaison OU de modes d'erreur de sortie de l'arbre de défaillances de composants du composant côté entrée (A) ou de plusieurs arbres de défaillances de composants des composants côté entrée (A, B) associés au même mode d'erreur d'entrée de l'arbre de défaillances de composants du composant côté sortie (C) est changée en une liaison ET (32, 54, 84), lorsque
l'arbre de défaillances pour le circuit et/ou pour un système technique avec le circuit contient une information correspondante sur la liaison en tant que liaison ET ou
la description du circuit contient une information correspondante sur la liaison en tant que liaison ET.

4. Procédé selon la revendication 1 ou 2, dans lequel l'arbre de défaillances de composants pour le circuit est modifié, dans lequel une liaison ET de modes d'erreur de sortie de l'arbre de défaillances de composants du composant côté entrée (A) ou de plusieurs arbres de défaillances de composants des composants côté entrée (A, B) associés au même mode d'erreur d'entrée de l'arbre de défaillances de composants du composant côté sortie (C) est changée en une liaison OU (53), lorsque
l'arbre de défaillances pour le circuit et/ou pour un système technique avec le circuit contient une information correspondante sur la liaison en tant que liaison OU ou
la description du circuit contient une information correspondante sur la liaison en tant que liaison OU.

5. Procédé selon l'une des revendications précédentes, dans lequel le mode d'erreur côté sortie de l'arbre de défaillances de composants du composant côté entrée (A, B) est corrélé à un mode d'erreur d'entrée de l'arbre de défaillances de composants du composant côté sortie (C), si les modes d'erreur ont sensiblement les mêmes noms.

6. Procédé selon l'une des revendications 1 à 4, dans lequel le mode d'erreur côté sortie de l'arbre de défaillances de composants du composant côté entrée (A) est corrélé à un mode d'erreur d'entrée de l'arbre de défaillances de composants du composant côté sortie (C), si les termes associés aux modes d'erreur sont sensiblement les mêmes.

7. Procédé selon l'une des revendications précédentes, dans lequel les modes d'erreur de sortie de plusieurs arbres de défaillances de composants des composants côté entrée (A, B) sont associés à un mode d'erreur d'entrée de l'arbre de défaillances de composants du composant côté sortie.

8. Procédé selon l'une des revendications précédentes, dans lequel des modes d'erreur de sortie de plusieurs arbres de défaillances de composants des composants côté entrée (A, B) sont associés à plusieurs modes d'erreur d'entrée d'arbres de défaillances de composants de plusieurs composants côté sortie (C).

9. Procédé selon l'une des revendications précédentes, dans lequel la description du circuit comprend une identification des composants (A, B, C) et de leurs raccordements (10A, 10B, 41A, 41B, 41C, 42A, 42B, 42C, 71A, 71C, 72A, 72C).

10. Procédé selon l'une des revendications précédentes, dans lequel la description du circuit comprend également l'attribution d'un risque à un raccordement (10A, 10B, 41A, 41B, 41C, 42A, 42B, 42C, 71A, 71C, 72A, 72C) d'un composant (A, B, C) .

11. Procédé selon l'une des revendications précédentes, dans lequel la description du circuit comprend également une information sur des composants redondants et/ou des connexions redondantes et/ou sur des liaisons ET de composants ou de connexions.

12. Procédé selon l'une des revendications précédentes, dans lequel le circuit comporte au moins deux composants identiques et le même arbre de défaillances de composants (20A, 20B) est utilisé pour chacun d'eux.

13. Procédé selon l'une des revendications précédentes, dans lequel la description du circuit comprend également une information sur un taux d'erreur d'un composant.

14. Procédé selon l'une des revendications précédentes, dans lequel l'arbre de défaillances de composants du circuit comprend une indication quantitative d'un taux d'erreur du circuit.

15. Procédé selon l'une des revendications précédentes, dans lequel l'arbre de défaillances de composants généré est examiné afin de détecter et/ou d'identifier une éventuelle erreur dans la description du circuit.

16. Dispositif de modélisation d'un arbre de défaillances d'un circuit électrique, comprenant des moyens pour exécuter le procédé selon l'une des revendications précédentes.

17. Produit de programme informatique comprenant des instructions qui, lorsque le programme est exécuté par un ordinateur, amènent celui-ci à exécuter un procédé selon l'une des revendications 1 à 15.

18. Support de données lisible par ordinateur, sur lequel le produit de programme informatique, selon la revendication 17, est enregistré.
